# FASCICULE DE BREVET EUROPEEN

(11) **EP 4 702 893 B1**
(45) Date de publication et mention de la délivrance du brevet: **26.08.2026**
(21) Numéro de dépôt: 25196537.2
(22) Date de dépôt: 18.08.2025
(51) Int. Cl.: A47J 31/44, A47J 31/06

(54) **STATION DE TASSAGE DE MARC DE CAFE**
STATION ZUM ANDRÜCKEN DES KAFFEEPULVERS
COFFEE GROUNDS TAMPING STATION

(30) Priorité: 02.09.2024 FR 2409308
(43) Date de publication de la demande: 04.03.2026
(73) Titulaire: SEB S.A., 69130 Ecully (FR)
(72) Inventeur: DUTRUEL, Laurent, 69134 ECULLY CEDEX (FR)
(74) Mandataire: SEB Développement

(56) Documents cités:
- CN-U- 216 702 293
- KR-A- 20130 052 172
- US-A1- 2017 361 961

## Description

### Domaine technique

La présente invention se rapporte au domaine des appareils de préparation de boissons à base de café mettant en œuvre un porte-filtre. De tels appareils comprennent un porte-filtre définissant une chambre d'infusion destinée à recevoir de la mouture de café. Le porte-filtre est propre à être associé à une sortie de distribution de liquide de l'appareil de préparation de boisson afin que, lors du fonctionnement de l'appareil, de l'eau, de préférence chaude (par exemple à une température supérieure à 80°C), soit reçue dans la chambre d'infusion pour infuser la mouture de café et délivrer ensuite la boisson à base de café en sortie du porte-filtre. L'invention se rapporte notamment au domaine des stations de tassage de marc de café dans un porte-filtre.

### Etat de la technique

Il est connu de CN216702293 U une station de tassage de marc de café dans un porte-filtre comprenant un logement de réception d'un porte-filtre, un bac de vidange de mouture usagée et un logement de réception d'un organe de tassage manuel de la mouture dans le porte-filtre.

Une telle station de tassage permet d'accueillir l'ensemble des éléments nécessaires à la réalisation d'un café à savoir, le porte-filtre, l'organe de tassage voire même un distributeur de mouture et également de réaliser la vidange du porte-filtre dans le bac de vidange à l'aide d'une barre de frappe contre laquelle un utilisateur est propre à venir frapper le porte-filtre.

Cependant, la station de tassage proposée dans CN216702293 U est complexe à utiliser et les opérations de tassage de la mouture dans le porte-filtre, alors que le porte-filtre est reçu par la station de tassage, et également de vidange du porte-filtre dans le bac de vidange, sont complexes. En effet, sous l'effet des efforts exercées par l'utilisateur sur la station de tassage pour les opérations de tassage et/ou de vidange, la station de tassage est notamment sujette à des déplacements non désirés. De tels déplacements nuisent à une bonne utilisation de la station et conduisent à une complexité d'utilisation, voire à un mauvais tassage, ce qui peut nuire à la qualité du café réalisé, voire encore à une vidange du porte-filtre en dehors du bac de vidange et aller jusqu'à un risque de blessure pour l'utilisateur lors de l'utilisation de la station de tassage. Le document KR 2013 0052172 A divulgue également une station de tassage de marc de café.

### Résumé de l'invention

La présente invention vise à remédier à ces inconvénients.

Le problème technique à la base de l'invention consiste à proposer une station de tassage dont l'utilisation est facilitée et permettant notamment de faciliter les opérations de tassage et avantageusement de vidange pour l'utilisateur.

A cet effet, l'invention a pour objet une station de tassage de marc de café selon la revendication 1.

Grâce à l'invention, la station de tassage est simple d'utilisation et les opérations de tassage et avantageusement de vidange sont simplifiées. En effet, la deuxième configuration assemblée permet d'assurer une stabilité accrue de la station de tassage lors des opérations de tassage et avantageusement de vidange avec la saillie axiale qui est propre à venir en appui contre un bord libre du plan de travail. De plus, la première configuration assemblée permet en dehors des périodes de préparation de café de ranger la station de tassage librement sur le plan de travail ou dans un espace de rangement dédié.

Selon des aspects avantageux mais non obligatoires de l'invention, une telle station de tassage peut incorporer une ou plusieurs des caractéristiques suivantes, prises dans toute combinaison techniquement admissible.

Selon une caractéristique avantageuse de l'invention, la semelle est propre à être déplacée dans une configuration escamotée par rapport au corps principal dans laquelle la semelle est séparée du corps principal.

Un tel agencement permet une manipulation aisée de la semelle et du corps principal, ainsi que de faciliter les opérations de nettoyage de la semelle et du corps principal.

Selon une caractéristique avantageuse de l'invention, le corps principal comprend une face inférieure munie d'au moins un premier organe de fixation propre à coopérer avec un deuxième organe de fixation formé sur la partie principale, chaque premier et deuxième organes de fixation assurant la fixation amovible de la semelle au corps principal.

Un tel agencement permet d'assurer la fixation de la semelle avec le corps principal lorsque la semelle est assemblée avec le corps principal de sorte que la semelle et le corps principal sont solidaires en mouvement et que si la semelle est immobilisée par rapport au plan de travail le corps principal l'est aussi.

Selon une caractéristique avantageuse de l'invention, dans la première configuration assemblée, la saillie axiale est reçue dans un logement additionnel formé au niveau d'un bord inférieur arrière du corps principal, et dans la deuxième configuration assemblée, la saillie axiale est adjacente à un bord inférieur avant du corps principal.

Un tel agencement permet d'améliorer la compacité et la facilité d'utilisation de la station de tassage.

Selon une caractéristique avantageuse de l'invention, dans la première configuration assemblée, une première face de la partie principale est destinée à être en contact avec le plan de travail et une deuxième face de la partie principale, opposée à la première face suivant un axe vertical, est en contact avec une face inférieure du corps principal, et dans la deuxième configuration assemblée, la deuxième face est destinée à être en contact avec le plan de travail et la première face est en contact avec la face inférieure du corps principal.

Un tel agencement permet d'avoir une semelle à deux fonctions suivant sa position par rapport au corps principal, une fonction de rangement et de positionnement libre dans la première configuration assemblée et une fonction d'immobilisation de la station de tassage dans la deuxième configuration assemblée.

Selon une caractéristique avantageuse de l'invention, le premier logement comprend un orifice traversant au niveau d'une face inférieure du corps principal, l'orifice traversant étant propre à accueillir une sortie de distribution d'une boisson à base de café du porte-filtre lorsque le porte-filtre est positionné dans le premier logement, la partie principale comprend un premier orifice et un deuxième orifice, et dans la première configuration assemblée, le premier orifice est en regard de l'orifice traversant et dans la deuxième configuration assemblée, le deuxième orifice est en regard de l'orifice traversant.

Un tel agencement permet, de favoriser la compacité de l'ensemble station de tassage et porte-filtre quelle que soit la position de la semelle par rapport au corps principal.

Selon une caractéristique avantageuse de l'invention, la saillie axiale s'étend depuis un bord de la partie principale, sur au moins 60% de la longueur dudit bord, et s'étend sensiblement perpendiculairement à la partie principale, la hauteur maximale de la saillie axiale étant de préférence comprise entre 1 cm et 10 cm, de préférence encore entre 1,5 cm et 4 cm.

Un tel agencement permet de garantir une interaction optimisée entre le plan de travail et la saillie axiale lorsque la semelle est dans la deuxième configuration assemblée de sorte que l'immobilisation de la station de tassage lors des opérations de tassage et avantageusement de vidange est assurée.

Selon une caractéristique avantageuse de l'invention, la saillie axiale comprend suivant sa longueur une portion centrale de hauteur sensiblement constante et deux portions latérales opposées de hauteur décroissante depuis la portion centrale.

Un tel agencement permet de faciliter l'assemblage de la semelle avec le corps principal et notamment le positionnement de la saillie axiale par rapport au corps principal dans la première configuration assemblée.

Selon une caractéristique avantageuse de l'invention, la semelle est en matériau élastomère.

Un tel agencement permet d'améliorer l'adhérence de la semelle avec le plan de travail.

Selon une caractéristique avantageuse de l'invention, le corps principal comprend un deuxième logement de réception d'un organe de tassage manuel.

Un tel agencement permet de positionner l'organe de tassage manuel sur la station de tassage.

Selon une caractéristique avantageuse de l'invention, le corps principal comprend un troisième logement de réception d'un bac de vidange de mouture usagée et d'une barre de frappe du porte-filtre, le bac de vidange et la barre de frappe étant propres à être fixés de manière amovible au troisième logement, la barre de frappe étant propre à s'étendre en travers du bac de vidange.

Un tel agencement permet de vidanger le porte-filtre à l'aide de la station de tassage et ainsi d'avoir une station de tassage permettant d'assurer un tassage mais aussi une vidange simplifiée du porte-filtre.

Selon une caractéristique avantageuse de l'invention, le porte-filtre comprend une chambre d'infusion destinée à recevoir de la mouture de café, une poignée de préhension et une partie de liaison s'étendant entre la chambre d'infusion et la poignée de préhension, le premier logement étant propre à recevoir la chambre d'infusion et le corps principal comprenant sur un côté avant un logement supplémentaire traversant débouchant dans le premier logement et propre à recevoir la partie de liaison.

Un tel agencement permet d'optimiser l'intégration du porte-filtre à la station de tassage et permet à l'utilisateur de pouvoir tenir le porte-filtre via la poignée de préhension lors de l'opération de tassage pour assurer un tassage et une répartition de la mouture optimisés.

Selon une caractéristique avantageuse de l'invention, le premier logement comprend un premier élément de fixation propre à coopérer avec un deuxième élément de fixation formé sur le porte-filtre, le premier et le deuxième éléments de fixation assurant une immobilisation du porte-filtre dans le premier logement.

Un tel agencement permet d'assurer un maintien du porte-filtre en position dans le premier logement lors de l'opération de tassage et ainsi d'assurer un tassage et une répartition de la mouture optimisés.

L'invention a également pour objet un ensemble de préparation de boissons à base de café selon la revendication 14.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une représentation d'un ensemble de préparation de boissons à base de café comprenant un appareil de préparation de boissons représenté de manière très schématique et une station de tassage de marc de café conforme à l'invention recevant un porte-filtre, un organe de tassage et un bac de vidange de marc de café ;
La figure 2 est une vue en perspective en éclaté de la station de tassage de la figure 1, la station de tassage étant observée de dessus et par l'avant ;
La figure 3 est une vue en perspective en éclaté de dessous de la station de tassage des figures 1 et 2, la station de tassage étant observée de dessous et par l'arrière ;
La figure 4 est une vue en perspective de dessus de la station de tassage des figures 1 à 3 comprenant un corps principal et une semelle positionnée dans une première configuration assemblée avec le corps principal ;
La figure 5 est une vue en perspective de dessous et par l'arrière de la station de tassage de la figure 4, la semelle étant dans une configuration escamotée par rapport au corps principal ;
La figure 6 est une vue en perspective de dessous et par l'arrière de la station de tassage de la figure 4, la semelle étant positionnée dans une deuxième configuration assemblée avec le corps principal ;
La figure 7 est une vue en perspective par l'avant de la station de tassage de la figure 6.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes « horizontal », « vertical », « inférieur », « supérieur », « haut », « bas », « avant », « arrière », « longitudinal », « transversal », employés pour décrire la station de tassage et/ou l'appareil de distribution de boissons font référence à ces dispositifs en situation d'usage, notamment lorsqu'ils sont positionnés sur un plan de travail en vue de la préparation d'une boisson à base de café.

Une partie « avant » de la station de tassage est notamment destinée à être positionnée face à l'utilisateur en situation d'usage de la station de tassage et une partie « arrière » de la station de tassage est destinée à être positionnée à l'opposé de l'utilisateur.

De plus les termes « droit » et « gauche » employés pour décrire la station de tassage font référence à ce dispositif en situation d'usage lorsque l'utilisateur est positionné face à la station de tassage.

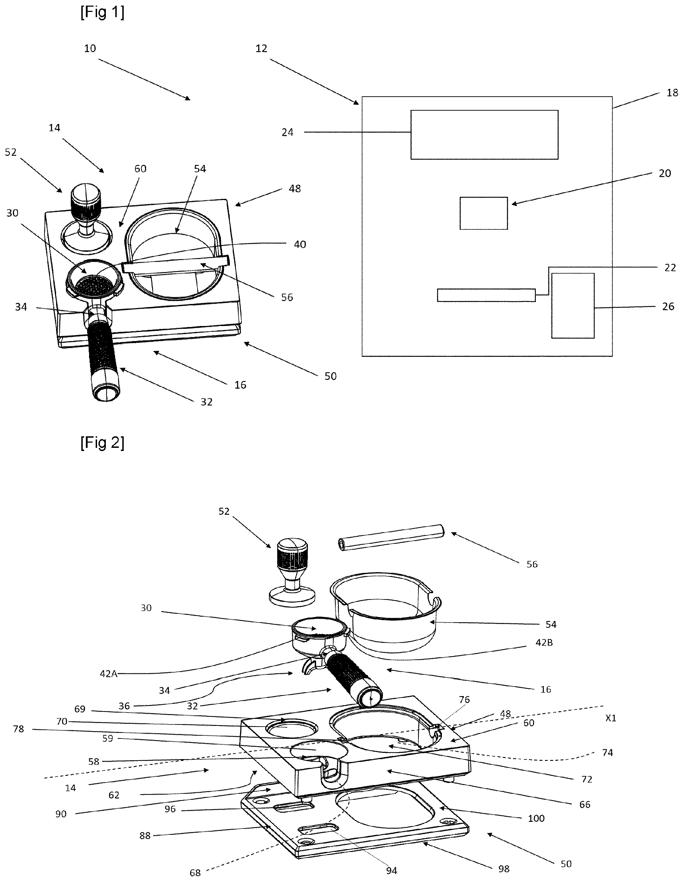

Un ensemble de préparation de boissons à base de café 10 comprenant un appareil de préparation de boissons 12 et une station de tassage 14 de marc de café est représenté à la figure 1.

L'appareil de préparation de boissons 12 est un appareil de préparation de boissons à base de café et est notamment une machine à café.

Dans la suite de la description les termes appareil de préparation de boissons et machine à café sont utilisés indifféremment l'un de l'autre.

La machine à café 12 est propre à coopérer avec un porte-filtre 16 contenant de la mouture de café pour réaliser et distribuer une boisson à base de café. Sur la figure 1, le porte-filtre 16 est représenté associé à la station de tassage 14 et non à la machine à café 12.

Comme visible sur la figure 1, la machine à café 12 comporte un bâti ou boitier 18, et une sortie de distribution de liquide 20. La sortie de distribution de liquide 20 est configurée pour recevoir le porte-filtre 16 lors de la préparation d'une boisson à base de café afin de délivrer de l'eau, de préférence chaude, par exemple à une température supérieure à 80°C, dans le porte-filtre 16 et infuser de la mouture de café reçue dans le porte-filtre 16.

La machine à café 12 comprend également un support de récipient 22 sur lequel un contenant/récipient, non représenté, peut être disposé.

La machine à café 12 comprend avantageusement une interface homme machine 24 via laquelle un utilisateur est propre à sélectionner un type de boisson à préparer/distribuer et avantageusement à saisir des paramètres de réglage de la machine à café 12.

La machine à café 12 comprend également un réservoir d'eau 26 par exemple situé dans une partie arrière du boîtier 18.

La machine à café 12 comporte également une unité de préparation de boissons, non représentée, intégrée au boîtier 18.

L'unité de préparation comprend un circuit de commande pour gérer la réalisation d'une boisson à partir des instructions données par l'utilisateur. L'unité de préparation comprend également une pompe de circulation de liquide, un bloc de chauffe également appelé chaudière produisant de l'eau chaude et avantageusement de la vapeur.

La sortie de distribution de liquide 20 est configurée pour être reliée fluidiquement à la chaudière et pour distribuer l'eau chaude issue de la chaudière dans le porte-filtre 16 lorsque celui-ci est fixé à la sortie de distribution de liquide 20.

Le porte-filtre 16, visible aux figures 1 à 3, comprend une chambre d'infusion 30 destinée à recevoir de la mouture de café, une poignée de préhension 32 et une partie de liaison 34 s'étendant entre la chambre d'infusion 30 et la poignée de préhension 32.

Le porte-filtre 16 comprend également en dessous de la chambre d'infusion 30 deux sorties de distribution 36, 38 d'une boisson à base de café. Un tel agencement permet de distribuer la boisson à base de café dans deux tasses simultanément. En variante, le porte-filtre 16 comprend une seule sortie de distribution d'une boisson à base de café.

La chambre d'infusion 30 est munie en son fond d'un tamis de filtration 40 en communication fluidique avec les sorties de distribution 36, 38 et propre à filtrer la boisson infusée dans la chambre d'infusion pour retenir la mouture de café dans la chambre d'infusion 30 et transmettre la boisson à base de café vers les sorties de distribution 36, 38.

Le porte-filtre 16 est propre à être fixé de manière amovible à la sortie de distribution de liquide 20 pour distribuer une boisson à base de café au niveau des sorties de distribution 36, 38.

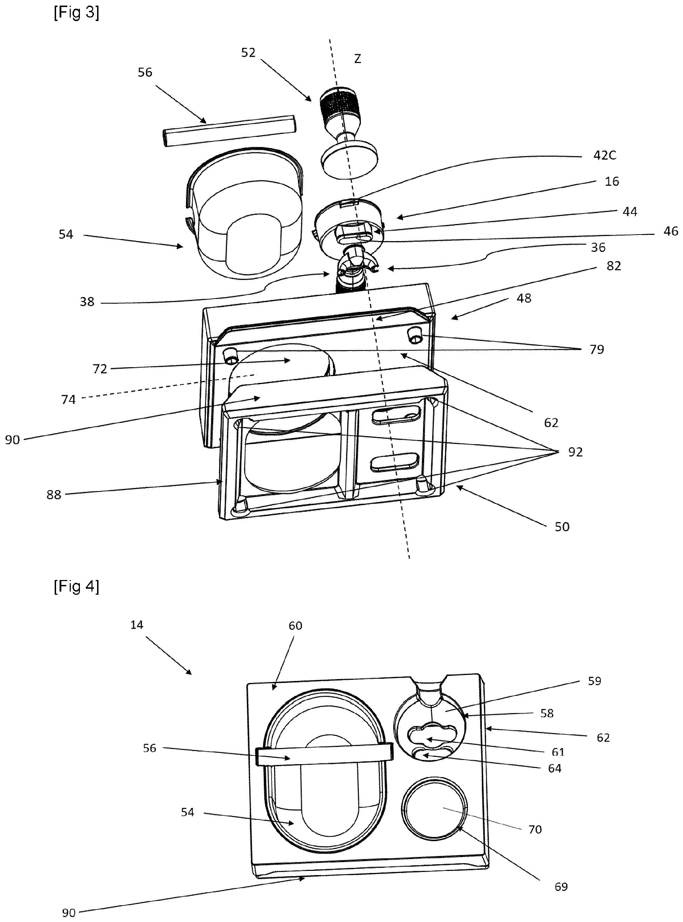

Le porte-filtre 16 comprend par exemple des ergots 42A, 42B, 42C, visibles aux figures 2 et 3, de fixation amovible du porte-filtre 16 et notamment de la chambre d'infusion 30 à la sortie de distribution de liquide 20. Ainsi, lorsque le porte-filtre est fixé à la sortie de distribution de liquide 20, la chambre d'infusion 30 est propre à recevoir de l'eau, de préférence chaude, et la mouture de café contenue dans la chambre d'infusion 30 est alors propre à être infusée pour produire la boisson à base de café.

Le porte-filtre 16 comprend également un élément de fixation 44 propre à coopérer avec la station de tassage 14 pour fixer le porte-filtre 16 à la station de tassage 14.

L'élément de fixation 44, visible à la figure 3, est par exemple fixé sous la chambre d'infusion 30 et est formé par un ergot 46 solidaire d'un fond de la chambre d'infusion 30.

L'ergot 46 prend par exemple la forme d'une excroissance axiale, suivant un axe vertical Z, propre à s'étendre depuis une paroi inférieure de la chambre d'infusion 30 vers le bas, à l'opposé de la chambre d'infusion 30.

La station de tassage 14 comprend un corps principal 48 et une semelle 50.

Le corps principal 48 est configuré pour recevoir le porte-filtre 16 comme représenté à la figure 1. Avantageusement, le corps principal 48 est également configuré pour recevoir un organe de tassage manuel 52 de la mouture contenue dans le porte-filtre 16, un bac de vidange 54 de mouture usagée et une barre de frappe 56 du porte-filtre 16 au-dessus du bac de vidange 54.

Le corps principal 48 comprend un premier logement 58 de réception du porte-filtre 16.

Le premier logement 58 est propre à recevoir la chambre d'infusion 30 du porte-filtre 16.

Le premier logement 58 est par exemple formé par une cavité principale 59 ménagée dans une face supérieure 60 du corps principal 48.

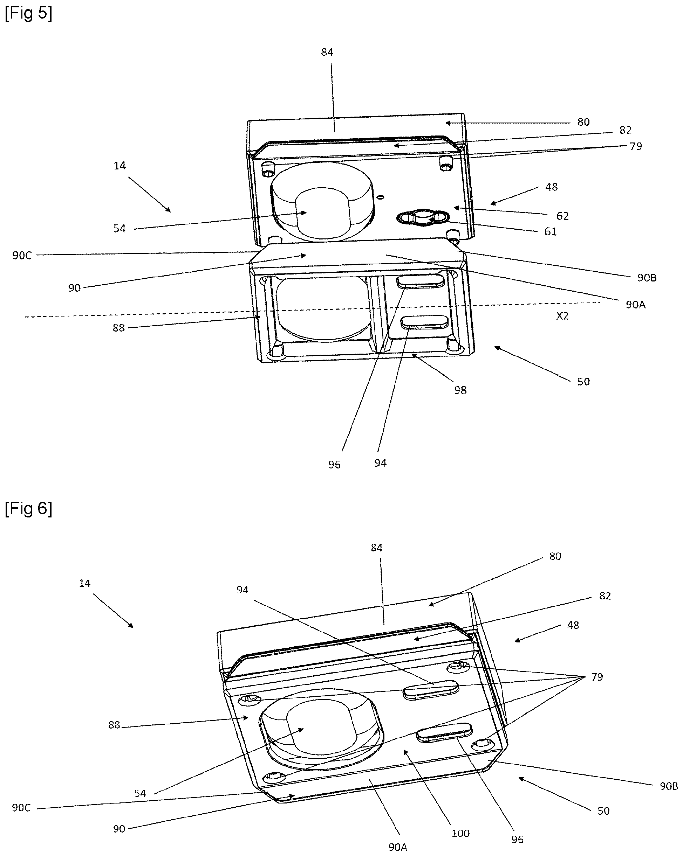

Comme visible aux figures 4 et 6, le premier logement 58 comprend un orifice traversant 61 au niveau d'une face inférieure 62 du corps principal 48. L'orifice traversant 61 est propre à accueillir les sorties de distribution 36, 38 lorsque le porte-filtre 16 est reçu dans le premier logement 58.

Le premier logement 58 comprend également un premier élément de fixation 64, visible à la figure 4, propre à coopérer avec un deuxième élément de fixation, à savoir l'élément de fixation 44 formé sur le porte-filtre, lorsque le porte-filtre 16 est reçu dans le premier logement 58.

Le premier élément de fixation 64 est par exemple formé par une cavité destinée à recevoir l'ergot 46.

Le premier 64 et le deuxième 44 éléments de fixation assurent une immobilisation du porte-filtre 16 dans le premier logement 58 lorsque le porte-filtre est reçu dans le premier logement 58.

Le corps principal 48 comprend sur un côté avant 66 un logement supplémentaire traversant 68 débouchant dans le premier logement 58 et propre à recevoir la partie de liaison 34 lorsque le porte-filtre est reçu dans le premier logement 58.

Le corps principal 48 comprend un deuxième logement 69 de réception de l'organe de tassage manuel 52.

Le deuxième logement 69 est formé par une cavité additionnelle 70 ménagée dans la face supérieure 60 du corps principal 48. La cavité additionnelle 70 est propre à recevoir une partie de tassage de l'organe de tassage manuel 52, l'organe de tassage manuel 52 comprenant également une partie de préhension s'étendant verticalement vers le haut depuis la partie de tassage.

Le corps principal 48 comprend un troisième logement 72 de réception du bac de vidange 54 de mouture usagée et de la barre de frappe 56.

Le troisième logement 72 comprend un orifice traversant additionnel 74 ménagé verticalement au travers du corps principal 48. L'orifice traversant additionnel 74 est propre à recevoir le bac de vidange 54. Le troisième logement 72 comprend également de part et d'autre de l'orifice traversant additionnel 74 suivant un axe longitudinal X1, des zones de support 76, 78 de la barre de frappe 56 visibles à la figure 2. Chaque zone de support 76, 78 est propre à recevoir une extrémité respective de la barre de frappe. Ainsi, la barre de frappe 56 est propre à s'étendre en travers du bac de vidange 54 lorsque celui-ci est reçu dans le troisième logement 72.

Le bac de vidange 54 et la barre de frappe 56 sont propres à être fixés de manière amovible au troisième logement 72.

Le corps principal 48 comprend sur la face inférieure 62 au moins un premier organe de fixation 79 propre à coopérer avec un organe de fixation correspondant formé sur la semelle 50.

Le premier organe de fixation 79 comprend par exemple un corps cylindrique s'étendant verticalement vers le bas depuis la face inférieure 62 du corps principal 48.

Dans l'exemple de la figure 3, le corps principal 48 comprend quatre premiers organes de fixation 79, un à chaque coin du corps principal 48.

Chaque premier organe de fixation 79 assure une fixation amovible de la semelle 50 au corps principal 48.

Le corps principal 48 comprend sur un côté arrière 80 un évidement. L'évidement forme un logement additionnel 82 propre à recevoir une portion de la semelle 50 dans une première configuration assemblée de la semelle 50 par rapport au corps principal 48 visible à la figure 4. L'évidement est formé au niveau d'un bord inférieur arrière du corps principal 48 et est délimité en partie supérieure du corps principal par une face arrière 84 du corps principal 48 dont l'évidement est en retrait. La coopération de la semelle 50 avec le corps principal 48 sera mieux comprise à l'appui de la description de la semelle 50 ci-après.

La semelle 50 est destinée à recevoir le corps principal 48 et à former l'interface entre le corps principal 48 et un plan de travail sur lequel est positionnée la station de tassage 14. La semelle 50 forme une base de la station de tassage 14 en contact avec le plan de travail.

La semelle 50 comprend une partie principale 88 destinée, d'une part, à accueillir le corps principal 48 et, d'autre part, à être en contact avec le plan de travail sur lequel la station de tassage est positionnée.

La semelle 50 comprend également une saillie axiale 90 s'étendant depuis la partie principale 88. La saillie axiale 90 s'étend sensiblement selon l'axe vertical Z.

La saillie axiale 90 s'étend depuis un bord de la partie principale 88, sur au moins 60%, de préférence sur au moins 90%, de la longueur dudit bord mesurée selon l'axe longitudinal X1, et s'étend sensiblement perpendiculairement à la partie principale 88.

La hauteur maximale de la saillie axiale 90 est de préférence comprise entre 1 cm et 10 cm, de préférence encore entre 1,5 cm et 4 cm.

La saillie axiale 90 comprend suivant sa longueur, comme visible à la figure 5, une portion centrale 90A de hauteur sensiblement constante et deux portions latérales 90B, 90C opposées de hauteur décroissante depuis la portion centrale 90A.

La saillie axiale 90 forme une languette en saillie de la partie principale 88.

La semelle 50 est avantageusement en matériau élastomère, par exemple en caoutchouc, de sorte à assurer une adhérence optimisée au plan de travail visant à empêcher un mouvement de la station de tassage lors d'opérations de tassage de la mouture dans le porte-filtre 16 par l'utilisateur à l'aide de l'organe de tassage manuel 52 ou de vidange du porte-filtre 16 dans le bac de vidange 54 par l'utilisateur.

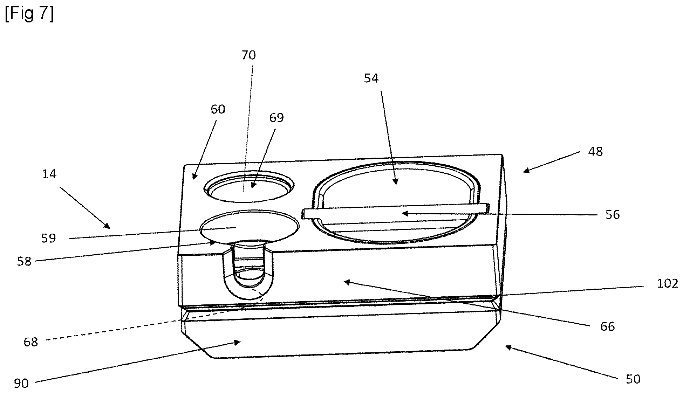

La semelle 50 est propre à être fixée au corps principal 48 de manière amovible suivant deux configurations :
- une première configuration assemblée au corps principal 48, visible aux figures 1 et 4, dans laquelle la saillie axiale 90 s'étend vers le haut en direction du corps principal 48, et
- une deuxième configuration assemblée au corps principal 48, visible aux figures 6 et 7, dans laquelle la saillie axiale s'étend vers le bas à l'opposé du corps principal 48 et est propre à former une surface d'appui contre un bord libre du plan de travail.

La semelle 50 est également propre à être déplacée dans une configuration escamotée par rapport au corps principal 48 dans laquelle la semelle est séparée du corps principal 48.

Pour déplacer la semelle 50 en position escamotée, un effort vertical de séparation est appliqué par l'utilisateur entre le corps principal 48 et la semelle 50.

La semelle 50 comprend pour chaque premier organe de fixation 79 un deuxième organe de fixation 92 formé sur la partie principale 88. Chaque premier 79 et deuxième 92 organes de fixation assurent la fixation amovible de la semelle 50 au corps principal 48.

Chaque deuxième organe de fixation 92 est par exemple formé par un logement supplémentaire propre à recevoir le corps cylindrique du premier organe de fixation 79 correspondant.

Dans la première configuration assemblée, la saillie axiale 90 s'étend vers le haut depuis la partie principale 88 et est reçue dans le logement additionnel 82. La saillie axiale 90 est alors affleurante avec la face arrière 84. Dans la première configuration, la saillie axiale 90 s'étend donc parallèlement au côté arrière 80 du corps principal 48.

La partie principale 88 comprend un premier orifice 94 et un deuxième orifice 96 propres à coopérer avec l'orifice traversant 61 lorsque la semelle 50 est dans la première respectivement la deuxième configuration assemblée.

En d'autres termes, dans la première configuration assemblée, le premier orifice 94 est positionné en regard de l'orifice traversant 61 et dans la deuxième configuration assemblée, le deuxième orifice 96 est en regard de l'orifice traversant 61.

Les deuxièmes organes de fixation 92 sont agencées symétriquement suivant un axe longitudinal central X2 de la semelle 50. Le premier 94 et le deuxième 96 orifices sont également agencés symétriquement suivant l'axe longitudinal central X2 de la semelle 50.

Pour passer de la première configuration assemblée à la deuxième configuration assemblée la semelle 50 est séparée du corps principal et donc déplacée en configuration escamotée, puis l'utilisateur effectue une rotation de la semelle de 180° autour de l'axe longitudinal central X2.

Dans la première configuration assemblée, une première face 98 de la partie principale 88 est destinée à être en contact avec le plan de travail et une deuxième face 100 de la partie principale 88, opposée à la première face suivant l'axe vertical Z, est en contact avec la face inférieure 62 du corps principal 48.

Dans la deuxième configuration assemblée, la deuxième face 100 est destinée à être en contact avec le plan de travail et la première face 98 est en contact avec la face inférieure 62 du corps principal 48.

Dans la deuxième configuration assemblée, la saillie axiale 90 est adjacente à un bord inférieur avant 102 du corps principal 48. Dans la deuxième configuration assemblée, la saillie axiale 90 s'étend vers le bas depuis la partie principale 88, de préférence sensiblement dans le même plan vertical qu'une face avant du corps principal 48 formant le côté avant 66. La saillie axiale 90 est configurée pour former une surface/languette d'appui contre le bord libre du plan de travail. Le bord libre du plan de travail est celui positionné en regard de l'utilisateur lorsqu'il utilise la station de tassage 14. Le bord libre s'étend perpendiculairement à la face du plan de travail recevant la station de tassage 14 et la machine à café 12.

Un exemple d'utilisation de l'ensemble de préparation de boissons à base de café 10 sera décrit par la suite.

Dans une première étape de fourniture, la station de tassage 14, avec la semelle qui est dans la première configuration assemblée, la machine à café 12 comprenant le porte-filtre 16, ainsi que l'organe de tassage manuel 52, le bac de vidange 54 et la barre de frappe 56 sont fournis à l'utilisateur.

Ensuite, lors d'une étape de préparation de la station de tassage 14, l'utilisateur déplace la semelle 50 de la première configuration assemblée vers la deuxième configuration assemblée. L'utilisateur positionne ensuite la station de tassage 14 sur le plan de travail de sorte que la saillie axiale 90 soit en contact avec le bord libre du plan de travail, le côté avant 66 du corps principal 48 étant positionné en regard de l'utilisateur.

Lors d'une étape d'installation préalable à l'étape de préparation de la station ou suivant l'étape de préparation de la station, l'utilisateur positionne le porte-filtre 16 dans le premier logement 58, l'organe de tassage manuel 52 dans le deuxième logement 69, le bac de vidange 54 dans l'orifice traversant additionnel 74 et les extrémités de la barre de frappe 56 dans les zones de support 76, 78 correspondantes. L'orifice traversant 61 et le premier orifice 94 reçoivent les sorties de distribution 36, 38 de sorte que la hauteur sur laquelle le porte-filtre 16 dépasse du corps principal 48 est limitée et la compacité de l'ensemble porte-filtre 16 et station de tassage 14 est optimisée.

Ensuite, dans une étape de préparation de la mouture, l'utilisateur remplit la chambre d'infusion 30 avec de la mouture de café puis se saisit de la poignée de préhension 32 et de l'organe de tassage manuel 52 pour réaliser l'opération de tassage de la mouture dans le porte-filtre 16.

Lors de l'étape de préparation de la mouture, grâce à la saillie axiale 90 et avantageusement au matériau de la semelle, la station de tassage 14 est immobilisée sur le plan de travail malgré l'effort de tassage appliqué par l'utilisateur sur la mouture reçue dans la chambre d'infusion 30 à l'aide de l'organe de tassage manuel 52. L'opération de tassage est alors facilitée de sorte que le tassage soit uniforme et que la mouture soit régulièrement répartie dans la chambre d'infusion 30.

En outre, le premier 64 et le deuxième 44 éléments de fixation assurent un maintien optimisé du porte-filtre 16 dans le premier logement 58 de sorte que l'opération de tassage est facilitée.

Ensuite, lors d'une étape de réalisation de la boisson, l'utilisateur connecte le porte-filtre 16 à la sortie distribution de liquide 20 et sélectionne un type de boisson à préparer/distribuer via l'interface homme machine 24, un récipient étant positionné sous les sorties de distribution 36, 38.

Suite à la distribution de la boisson par la machine à café 12, l'utilisateur déconnecte le porte-filtre 16 de la sortie distribution de liquide 20 et vient frapper le porte-filtre 16 et notamment la partie de liaison 34 contre la barre de frappe 56 pour vider la mouture usagée dans le bac de vidange 54. Lors de cette opération de vidange du porte-filtre 16, grâce à la saillie axiale 90 et avantageusement au matériau de la semelle, la station de tassage 14 est immobilisée sur le plan de travail malgré l'effort de vidange exercé par l'utilisateur (la frappe exercée contre la barre de frappe 56).

Ensuite, lors d'une étape de nettoyage de la station de tassage 14, l'utilisateur sépare le porte-filtre 16, l'organe de tassage manuel 52, le bac de vidange 54 et la barre de frappe 56 du corps principal 48 pour nettoyer l'ensemble. Avantageusement, lors de l'étape de nettoyage, l'utilisateur déplace la semelle 50 dans la configuration escamotée par rapport au corps principal 48 pour nettoyer l'interface entre la semelle 50 et le corps principal 48.

Enfin, lors d'une étape de rangement de la station de tassage, l'utilisateur déplace la semelle 50 de la deuxième configuration assemblée vers la première configuration assemblée et est ainsi apte à positionner la station de tassage librement sur le plan de travail voire dans un espace de rangement, la face inférieure de la station de tassage 14 formée par la semelle 50 et notamment la première face 98 étant sensiblement plane. Dans la première configuration de la semelle 50, la station de tassage est plus compacte et plus facile à ranger ou positionner sur le plan de travail.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel que défini par les revendications.

## Revendications

1. Station de tassage (14) de marc de café dans un porte-filtre (16), la station de tassage (14) comprenant :
- un corps principal (48), le corps principal (48) comprenant un premier logement (58) de réception du porte-filtre,
- une semelle (50) comprenant une partie principale (88) destinée, d'une part, à accueillir le corps principal (48) et, d'autre part, à être en contact avec un plan de travail sur lequel la station de tassage (14) est positionnée,
la semelle (50) comprenant une saillie axiale (90) s'étendant depuis la partie principale (88), la station de tassage de marc de café étant **caractérisée en ce que** la semelle (50) est propre à être fixée au corps principal (48) de manière amovible suivant deux configurations :
- une première configuration assemblée au corps principal (48) dans laquelle la saillie axiale (90) s'étend vers le haut en direction du corps principal (48), et
- une deuxième configuration assemblée au corps principal (48) dans laquelle la saillie axiale (90) s'étend vers le bas à l'opposé du corps principal (48) et est propre à former une surface d'appui contre un bord libre du plan de travail.

2. Station de tassage (14) de marc de café selon la revendication 1, **caractérisée en ce que** la semelle (50) est propre à être déplacée dans une configuration escamotée par rapport au corps principal (48) dans laquelle la semelle est séparée du corps principal (48).

3. Station de tassage (14) de marc de café selon la revendication 1 ou 2, **caractérisée en ce que** le corps principal (48) comprend une face inférieure (62) munie d'au moins un premier organe de fixation (79) propre à coopérer avec un deuxième organe de fixation (92) formé sur la partie principale (88), chaque premier (79) et deuxième (92) organes de fixation assurant la fixation amovible de la semelle (50) au corps principal (48).

4. Station de tassage (14) de marc de café selon l'une quelconque des revendications précédentes, **caractérisée en ce que** dans la première configuration assemblée, la saillie axiale (90) est reçue dans un logement additionnel (82) formé au niveau d'un bord inférieur arrière du corps principal (48), et **en ce que** dans la deuxième configuration assemblée, la saillie axiale (90) est adjacente à un bord inférieur avant (102) du corps principal.

5. Station de tassage (14) de marc de café selon l'une quelconque des revendications précédentes, **caractérisée en ce que** dans la première configuration assemblée, une première face (98) de la partie principale est destinée à être en contact avec le plan de travail et une deuxième face (100) de la partie principale, opposée à la première face suivant un axe vertical, est en contact avec une face inférieure (62) du corps principal (48), et **en ce que** dans la deuxième configuration assemblée, la deuxième face (100) est destinée à être en contact avec le plan de travail et la première face (98) est en contact avec la face inférieure (62) du corps principal (48).

6. Station de tassage (14) de marc de café selon l'une quelconque des revendications précédentes, **caractérisée en ce que** le premier logement (58) comprend un orifice traversant (61) au niveau d'une face inférieure (62) du corps principal, l'orifice traversant (61) étant propre à accueillir une sortie de distribution (36, 38) d'une boisson à base de café du porte-filtre (16) lorsque le porte-filtre (16) est positionné dans le premier logement (58), **en ce que** la partie principale (88) comprend un premier orifice (94) et un deuxième orifice (96), **en ce que** dans la première configuration assemblée, le premier orifice (94) est en regard de l'orifice traversant (61) et **en ce que** dans la deuxième configuration assemblée, le deuxième orifice (96) est en regard de l'orifice traversant (61).

7. Station de tassage (14) de marc de café selon l'une quelconque des revendications précédentes, **caractérisée en ce que** la saillie axiale (90) s'étend depuis un bord de la partie principale (88), sur au moins 60% de la longueur dudit bord, et s'étend sensiblement perpendiculairement à la partie principale (88), la hauteur maximale de la saillie axiale (90) étant de préférence comprise entre 1 cm et 10 cm, de préférence encore entre 1,5 cm et 4 cm.

8. Station de tassage (14) de marc de café selon l'une quelconque des revendications précédentes, **caractérisée en ce que** la saillie axiale (90) comprend suivant sa longueur une portion centrale (90A) de hauteur sensiblement constante et deux portions latérales (90B, 90C) opposées de hauteur décroissante depuis la portion centrale (90A).

9. Station de tassage (14) de marc de café selon l'une quelconque des revendications précédentes, **caractérisée en ce que** la semelle (50) est en matériau élastomère.

10. Station de tassage (14) de marc de café selon l'une quelconque des revendications précédentes, **caractérisée en ce que** le corps principal (48) comprend un deuxième logement (69) de réception d'un organe de tassage manuel (52).

11. Station de tassage (14) de marc de café selon l'une quelconque des revendications précédentes, **caractérisée en ce que** le corps principal (48) comprend un troisième logement (72) de réception d'un bac de vidange (54) de mouture usagée et d'une barre de frappe (56) du porte-filtre, le bac de vidange (54) et la barre de frappe (56) étant propres à être fixés de manière amovible au troisième logement (72), la barre de frappe (56) étant propre à s'étendre en travers du bac de vidange (54).

12. Station de tassage (14) de marc de café selon l'une quelconque des revendications précédentes, **caractérisée en ce que** le porte-filtre (16) comprend une chambre d'infusion (30) destinée à recevoir de la mouture de café, une poignée de préhension (32) et une partie de liaison (34) s'étendant entre la chambre d'infusion (30) et la poignée de préhension (32), le premier logement (58) étant propre à recevoir la chambre d'infusion (30) et le corps principal (48) comprenant sur un côté avant (66) un logement supplémentaire traversant (68) débouchant dans le premier logement (58) et propre à recevoir la partie de liaison (34).

13. Station de tassage (14) de marc de café selon l'une quelconque des revendications précédentes, **caractérisée en ce que** le premier logement (58) comprend un premier élément de fixation (64) propre à coopérer avec un deuxième élément de fixation (44) formé sur le porte-filtre (16), le premier (64) et le deuxième (44) éléments de fixation assurant une immobilisation du porte-filtre (16) dans le premier logement (58).

14. Ensemble de préparation de boissons à base de café (10) comprenant un appareil de préparation de boissons (12) et une station de tassage (14) de marc de café, l'appareil de préparation de boissons (12) comprenant une sortie de distribution de liquide (20) et un porte-filtre (16) propre à être fixé de manière amovible à la sortie de distribution de liquide (20) pour distribuer une boisson à base de café, **caractérisé en ce que** la station de tassage (14) est selon l'une quelconque des revendications précédentes et est propre à recevoir le porte-filtre (16) dans le premier logement (58).

## Patentansprüche

1. Verdichtungsstation (14) für Kaffeepulver in einem Siebträger (16), wobei die Verdichtungsstation (14) umfasst:
• einen Hauptkörper (48), wobei der Hauptkörper (48) eine erste Aufnahme (58) zur Aufnahme des Siebträgers umfasst,
• eine Sohle (50), die einen Hauptteil (88) umfasst, der einerseits dazu bestimmt ist, den Hauptkörper (48) aufzunehmen, und andererseits dazu bestimmt ist, mit einer Arbeitsplatte, auf welcher die Verdichtungsstation (14) angeordnet ist, in Kontakt zu sein,
wobei die Sohle (50) einen axialen Vorsprung (90) umfasst, der sich von dem Hauptteil (88) erstreckt,
**dadurch gekennzeichnet, dass** die Sohle (50) dazu geeignet ist, in zwei Konfigurationen lösbar am Hauptkörper (48) befestigt zu werden:
• eine erste am Hauptkörper (48) montierte Konfiguration, in welcher sich der axiale Vorsprung (90) nach oben in Richtung des Hauptkörpers (48) erstreckt, und
• eine zweite am Hauptkörper (48) montierte Konfiguration, in welcher sich der axiale Vorsprung (90) nach unten, entgegengesetzt zum Hauptkörper (48), erstreckt und dazu geeignet ist, eine Auflagefläche gegen eine freie Kante der Arbeitsplatte zu bilden.

2. Verdichtungsstation (14) für Kaffeepulver nach Anspruch 1, **dadurch gekennzeichnet, dass** die Sohle (50) dazu geeignet ist, in eine zurückgezogene Konfiguration relativ zum Hauptkörper (48) bewegt zu werden, in der die Sohle vom Hauptkörper (48) getrennt ist.

3. Verdichtungsstation (14) für Kaffeepulver nach Anspruch 1 oder 2, **dadurch gekennzeichnet, dass** der Hauptkörper (48) eine Unterseite (62) umfasst, die mit mindestens einem ersten Befestigungsorgan (79) versehen ist, das dazu geeignet ist, mit einem zweiten Befestigungsorgan (92) zusammenzuwirken, das an dem Hauptteil (88) ausgebildet ist, wobei jedes erste (79) und zweite (92) Befestigungsorgan die lösbare Befestigung der Sohle (50) am Hauptkörper (48) sicherstellt.

4. Verdichtungsstation (14) für Kaffeepulver nach einem der vorhergehenden Ansprüche, **dadurch gekennzeichnet, dass** in der ersten montierten Konfiguration der axiale Vorsprung (90) in einer zusätzlichen Aufnahme (82) aufgenommen ist, die an einer unteren hinteren Kante des Hauptkörpers (48) ausgebildet ist, und dass in der zweiten montierten Konfiguration der axiale Vorsprung (90) an einer unteren vorderen Kante (102) des Hauptkörpers anliegt.

5. Verdichtungsstation (14) für Kaffeepulver nach einem der vorhergehenden Ansprüche, **dadurch gekennzeichnet, dass** in der ersten montierten Konfiguration eine erste Fläche (98) des Hauptteils dazu bestimmt ist, mit der Arbeitsplatte in Kontakt zu sein, und eine zweite Fläche (100) des Hauptteils, die entlang einer vertikalen Achse der ersten Fläche gegenüberliegt, mit einer Unterseite (62) des Hauptkörpers (48) in Kontakt ist, und dass in der zweiten montierten Konfiguration die zweite Fläche (100) dazu bestimmt ist, mit der Arbeitsplatte in Kontakt zu sein, und die erste Fläche (98) mit der Unterseite (62) des Hauptkörpers (48) in Kontakt ist.

6. Verdichtungsstation (14) für Kaffeepulver nach einem der vorhergehenden Ansprüche, **dadurch gekennzeichnet, dass** die erste Aufnahme (58) an einer Unterseite (62) des Hauptkörpers eine Durchgangsöffnung (61) umfasst, wobei die Durchgangsöffnung (61) dazu geeignet ist, einen Auslass (36, 38) einer Kaffeegetränkeausgabe des Siebträgers (16) aufzunehmen, wenn der Siebträger (16) in der ersten Aufnahme (58) positioniert ist, dass der Hauptteil (88) eine erste Öffnung (94) und eine zweite Öffnung (96) umfasst, dass in der ersten montierten Konfiguration die erste Öffnung (94) der Durchgangsöffnung (61) gegenüberliegt und dass in der zweiten montierten Konfiguration die zweite Öffnung (96) der Durchgangsöffnung (61) gegenüberliegt.

7. Verdichtungsstation (14) für Kaffeepulver nach einem der vorhergehenden Ansprüche, **dadurch gekennzeichnet, dass** sich der axiale Vorsprung (90) von einer Kante des Hauptteils (88) über mindestens 60 % der Länge der genannten Kante erstreckt und sich im Wesentlichen senkrecht zum Hauptteil (88) erstreckt, wobei die maximale Höhe des axialen Vorsprungs (90) vorzugsweise zwischen 1 cm und 10 cm, vorzugsweise zwischen 1,5 cm und 4 cm liegt.

8. Verdichtungsstation (14) für Kaffeepulver nach einem der vorhergehenden Ansprüche, **dadurch gekennzeichnet, dass** der axiale Vorsprung (90) entlang seiner Länge einen mittleren Abschnitt (90A) mit im Wesentlichen konstanter Höhe und zwei gegenüberliegende seitliche Abschnitte (90B, 90C) mit von dem mittleren Abschnitt (90A) aus abnehmender Höhe umfasst.

9. Verdichtungsstation (14) für Kaffeepulver nach einem der vorhergehenden Ansprüche, **dadurch gekennzeichnet, dass** die Sohle (50) aus einem Elastomermaterial besteht.

10. Verdichtungsstation (14) für Kaffeepulver nach einem der vorhergehenden Ansprüche, **dadurch gekennzeichnet, dass** der Hauptkörper (48) eine zweite Aufnahme (69) zur Aufnahme eines manuellen Verdichtungsorgans (52) umfasst.

11. Verdichtungsstation (14) für Kaffeepulver nach einem der vorhergehenden Ansprüche, **dadurch gekennzeichnet, dass** der Hauptkörper (48) eine dritte Aufnahme (72) zur Aufnahme eines Auffangbehälters (54) für gebrauchte Kaffeepulver und einer Schlagstange (56) des Siebträgers umfasst, wobei der Auffangbehälter (54) und die Schlagstange (56) dazu geeignet sind, lösbar an der dritten Aufnahme (72) befestigt zu werden, und die Schlagstange (56) dazu geeignet ist, sich quer über den Auffangbehälter (54) zu erstrecken.

12. Verdichtungsstation (14) für Kaffeepulver nach einem der vorhergehenden Ansprüche, **dadurch gekennzeichnet, dass** der Siebträger (16) eine Brühkammer (30), die dazu bestimmt ist, Kaffeepulver aufzunehmen, einen Griff (32) und einen Verbindungsabschnitt (34) umfasst, der sich zwischen der Brühkammer (30) und dem Griff (32) erstreckt, wobei die erste Aufnahme (58) dazu geeignet ist, die Brühkammer (30) aufzunehmen, und der Hauptkörper (48) an einer Vorderseite (66) eine zusätzliche, durchgehende Aufnahme (68) umfasst, die in die erste Aufnahme (58) mündet und dazu geeignet ist, den Verbindungsabschnitt (34) aufzunehmen.

13. Verdichtungsstation (14) für Kaffeepulver nach einem der vorhergehenden Ansprüche, **dadurch gekennzeichnet, dass** die erste Aufnahme (58) ein erstes Befestigungselement (64) umfasst, das dazu geeignet ist, mit einem zweiten Befestigungselement (44), das an dem Siebträger (16) ausgebildet ist, zusammenzuwirken, wobei das erste (64) und das zweite (44) Befestigungselement eine Fixierung des Siebträgers (16) in der ersten Aufnahme (58) sicherstellen.

14. Kaffeegetränkezubereitungsanordnung (10), umfassend ein Getränkezubereitungsgerät (12) und eine Verdichtungsstation (14) für Kaffeepulver, wobei das Getränkezubereitungsgerät (12) einen Flüssigkeitsauslass (20) und einen Siebträger (16) umfasst, der dazu geeignet ist, lösbar am Flüssigkeitsauslass (20) befestigt zu werden, um ein Kaffeegetränk auszugeben, **dadurch gekennzeichnet, dass** die Verdichtungsstation (14) gemäß einem der vorhergehenden Ansprüche ausgebildet ist und dazu geeignet ist, den Siebträger (16) in der ersten Aufnahme (58) aufzunehmen.

## Claims

1. Coffee grounds tamping station (14) in a portafilter (16), the tamping station (14) comprising:
• a main body (48), the main body (48) comprising a first housing (58) for receiving the portafilter,
• a sole (50) comprising a main portion (88) intended, on the one hand, to accommodate the main body (48) and, on the other hand, to be in contact with a worktop on which the tamping station (14) is positioned,
the sole (50) comprising an axial projection (90) extending from the main portion (88), the coffee grounds tamping station being **characterized in that** the sole (50) is suitable for being removably fixed to the main body (48) in two configurations:
• a first configuration assembled with the main body (48) in which the axial projection (90) extends upward towards the main body (48), and
• a second configuration assembled with the main body (48) in which the axial projection (90) extends downward opposite the main body (48) and is suitable for forming a bearing surface against a free edge of the worktop.

2. Coffee grounds tamping station (14) according to claim 1, **characterized in that** the sole (50) is suitable for being moved into a detached configuration relative to the main body (48) in which the sole is separated from the main body (48).

3. Coffee grounds tamping station (14) according to claim 1 or 2, **characterized in that** the main body (48) comprises a lower face (62) provided with at least one first fastening member (79) suitable for cooperating with a second fastening member (92) formed on the main portion (88), each first (79) and second (92) fastening member ensuring the removable fastening of the sole (50) to the main body (48).

4. Coffee grounds tamping station (14) according to any one of the preceding claims, **characterized in that**, in the first assembled configuration, the axial projection (90) is received in an additional housing (82) formed at a lower rear edge of the main body (48), and **in that**, in the second assembled configuration, the axial projection (90) is adjacent to a lower front edge (102) of the main body.

5. Coffee grounds tamping station (14) according to any one of the preceding claims, **characterized in that**, in the first assembled configuration, a first face (98) of the main portion is intended to be in contact with the worktop and a second face (100) of the main portion, opposite the first face along a vertical axis, is in contact with a lower face (62) of the main body (48), and **in that**, in the second assembled configuration, the second face (100) is intended to be in contact with the worktop and the first face (98) is in contact with the lower face (62) of the main body (48).

6. Coffee grounds tamping station (14) according to any one of the preceding claims, **characterized in that** the first housing (58) comprises a through-orifice (61) at a lower face (62) of the main body, the through-orifice (61) being suitable for accommodating a dispensing outlet (36, 38) of a coffee-based beverage from the portafilter (16) when the portafilter (16) is positioned in the first housing (58), **in that** the main portion (88) comprises a first orifice (94) and a second orifice (96), **in that**, in the first assembled configuration, the first orifice (94) faces the through-orifice (61) and **in that**, in the second assembled configuration, the second orifice (96) faces the through-orifice (61).

7. Coffee grounds tamping station (14) according to any one of the preceding claims, **characterized in that** the axial projection (90) extends from an edge of the main portion (88) over at least 60% of the length of said edge, and extends substantially perpendicularly to the main portion (88), the maximum height of the axial projection (90) preferably being between 1 cm and 10 cm, and more preferably between 1.5 cm and 4 cm.

8. Coffee grounds tamping station (14) according to any one of the preceding claims, **characterized in that** the axial projection (90) comprises, along its length, a central portion (90A) of substantially constant height and two opposite lateral portions (90B, 90C) of decreasing height from the central portion (90A).

9. Coffee grounds tamping station (14) according to any one of the preceding claims, **characterized in that** the sole (50) is made of elastomer material.

10. Coffee grounds tamping station (14) according to any one of the preceding claims, **characterized in that** the main body (48) comprises a second housing (69) for receiving a manual tamping member (52).

11. Coffee grounds tamping station (14) according to any one of the preceding claims, **characterized in that** the main body (48) comprises a third housing (72) for receiving a waste grounds collection tray (54) and a knock bar (56) for the portafilter, the collection tray (54) and the knock bar (56) being suitable for being removably fixed to the third housing (72), the knock bar (56) being suitable for extending across the collection tray (54).

12. Coffee grounds tamping station (14) according to any one of the preceding claims, **characterized in that** the portafilter (16) comprises a brewing chamber (30) intended to receive ground coffee, a gripping handle (32) and a connecting portion (34) extending between the brewing chamber (30) and the gripping handle (32), the first housing (58) being suitable for receiving the brewing chamber (30) and the main body (48) comprising, on a front side (66), an additional through housing (68) opening into the first housing (58) and suitable for receiving the connecting portion (34).

13. Coffee grounds tamping station (14) according to any one of the preceding claims, **characterized in that** the first housing (58) comprises a first fastening element (64) suitable for cooperating with a second fastening element (44) formed on the portafilter (16), the first (64) and second (44) fastening elements ensuring immobilization of the portafilter (16) in the first housing (58).

14. Coffee-based beverage preparation assembly (10) comprising a beverage preparation appliance (12) and a coffee grounds tamping station (14), the beverage preparation appliance (12) comprising a liquid dispensing outlet (20) and a portafilter (16) suitable for being removably fixed to the liquid dispensing outlet (20) to dispense a coffee-based beverage, **characterized in that** the tamping station (14) is according to any one of the preceding claims and is suitable for receiving the portafilter (16) in the first housing (58).
